# EUROPEAN PATENT APPLICATION

(11) **EP 1 355 249 A1**
(43) Date of publication of application: **22.10.2003**
(21) Application number: 03005125.4
(22) Date of filing: 07.03.2003
(51) Int. Cl.: G06F 17/60

(54) **Vehicle sales support system, method and computer program**

(30) Priority: 29.03.2002 JP 2002097602; 06.09.2002 JP 2002261443
(71) Applicant: Mazda Motor Corporation, Aki-gun, Hiroshima 730-8670 (JP)
(72) Inventor: Takaoka, Hiroki, Aki-gun, Hiroshima 730-8670 (JP)
(74) Representative: Müller-Boré & Partner Patentanwälte

(57) **Abstract**

The vehicle sales support apparatus decides a customized vehicle having a combination of a plurality of optional items according to an operation of a user terminal 2, and sets an article designation code for the customized vehicle when an article designation code has not been set for a vehicle having a combination of the same optional items as the decided customized vehicle.

## Description

### BACKGROUND OF THE INVENTION

The present invention relates to a vehicle sales support apparatus, a vehicle sales support program, a recording medium in which the program is recorded, and a vehicle sales support method, in which a user selects a specification of a vehicle online and information relating to a customized vehicle with the selected specification is provided to the user.

Conventionally, it is known that catalogue information on articles for sales is stored in a data base in the form of multimedia information, and information on the article identified in a computer system is read out from the above data base to execute an outside output, an estimate, an inquiry of desired delivery time, order receiving processing and the like (for example, Japanese Laid-Open Patent Publication No. 5-274326).

Further, in a field of vehicle sales, for example, there is a system, so-called BTO (Build to Order) in which a user (customer) of a customer terminal connected to the internet selects a desired specification according to predetermined optional items, and an estimate request and a negotiation application of a vehicle having the selected specification is executed online (for example, "Web Tune Factory" http://www.w-tune.com.)

By the way, in the above BTO system, it is one of features that the user can select any specifications of vehicles freely with respect to engines and transmissions by selecting desired one from various optional items (engine displacements in engines, AT or MT in transmissions).

Meanwhile, when a vehicle (customized vehicle) having specifications selected by the user is ordered, an article designation code to identify its specification of the customized vehicle would be necessary. Because, production control and materials distribution control for the customized vehicle are executed based on the article designation code or a control code corresponding to the article designation code in the production control system and the materials distribution control system of the customized vehicle.

Accordingly, if the article designation code for the customized vehicle has not been set when the customized vehicle is ordered, the production control and materials distribution control systems could not make procedures, from its order through its production and materials distribution, smooth, so that a delivery time of the vehicle may be delayed compared to its desired delivery time.

In order to prevent this delay of vehicle delivery time, in the above BTO system, all combinations of selectable optional items (candidates of customized vehicle) are set in advance, and the article designation codes are set previously for all candidates of the customized vehicle.

Further, in terms of preventing the delay of vehicle delivery time with smooth procedures, each of the set article designation codes has supplementary information correlated therewith, which is supplementary to each candidate of the customized vehicle. One of the supplementary information, specifically, is a tax price for vehicle acquisition. For example, its tax price for vehicle acquisition is calculated for each of the candidates of the customized vehicle in advance, and the tax price is correlated with each of the article designation code.

Further, vehicles have various dealer options (equipments) that are installed at sales companies. In the dealers options, there are some options that are not capable of being installed depending upon specifications of vehicles. Then, some information on capable/un-capable installment of dealer options (dealer option information) is correlated with each of the article designation codes.

Generally, setting of article designation codes for every candidate of customized vehicles in advance should be a troublesome work. The conventional system, however, has further supplementary information to be correlated with each of the set article designation codes, resulting in extremely troublesome works to be executed.

Further, because there may exist candidates of customized vehicles not ordered by users, some of the article designation codes that have been set would become useless, and thus some capacity of the data base that stores such article designation codes would be wasted.

Further, when a new vehicle (model) is on sale on the BTO system, new article designation codes need to be set for every candidate of customized vehicles for the new vehicle. Also, when some addition or deletion of the optional items occurs, the article designation codes should be reviewed. In this way, setting the article designation code in advance would cause a problem of some troublesomeness in controlling the article designation codes.

Additionally, the article designation code consists of a combination of alphabets and numbers with some predetermined figures, and there is a certain numbering rule in setting the article designation code. That is, for example, a rule in which a combination of alphabets and numbers with the first four figures identifies a combination of an engine and a transmission of vehicle (vehicle model). The total number of article designation codes is limited to a certain number by the number of the figures and the numbering rule of the article designation codes. Accordingly, if the article designation codes have been set in advance, the possible number of candidates of the customized vehicle would be limited because of the total number of the article designation codes. This should not be a reasonable thing, when thinking of a fact that there exist some candidates of the customized vehicle that are not selected by users.

The present invention has been devised in consideration of these conventional problems, and an object of the invention is to make a control of the article designation code easy in a system, in which a user selects a specification or configuration of a vehicle online and information on a customized vehicle having the selected specification or configuration is provided to the user.

### SUMMARY OF THE INVENTION

In order to achieve the object, the present invention is a vehicle sales support or configuration apparatus, in which in response to a request for selecting a vehicle specification or configuration from a user terminal connected via interactive communication lines, information on a customized vehicle having the selected vehicle specification or configuration is provided to the user terminal.

The vehicle sales support or configuration apparatus comprises specification or configuration selection means for deciding the customized vehicle having a combination of a plurality of optional items that are selected from optional items set in advance as the vehicle specification or configuration according to an operation of the user terminal, and code set means for setting an article designation code that is used for identifying the combination of optional items of the customized vehicle when the vehicle is ordered. The code set means does not set the article designation code for the decided customized vehicle when the article designation code has been set for a vehicle having the combination of the same optional items as the customized vehicle decided by the specification or configuration selection means, while the code set means sets the article designation code for the decided customized vehicle when the article designation code has not been set for a vehicle having the combination of the same optional items as the customized vehicle.

According to this structure, the specification or configuration selection means decides the customized vehicle having a combination of a plurality of optional items that are selected by the user from optional items set in advance.

The article designation code is not set for the decided customized vehicle when the article designation code has been set for a vehicle having the combination of the same optional items as the customized vehicle decided in this way. Meanwhile, the code set means sets the article designation code for the decided customized vehicle when the article designation code has not been set for a vehicle having the combination of the same optional items as the decided customized vehicle.

Accordingly, at each time a new combination of optional items is selected by the user, its article designation code corresponding to the optional items is set. Therefore, it is not necessary to set article designation codes for all combinations (candidates of customized vehicles) in advance. Also, even if any changes to optional items, such as addition/deletion or the like, occur, no entire reviews or the like of the article designation codes is necessary. As a result, it can simplify a control of the article designation code greatly.

Further, as described above, there may exist some candidates of the customized vehicle that are not decided by the user. Therefore, it can also decide the candidates of the customized vehicle beyond the total number of the article designation codes, contrary to the case in which the article designation codes are set in advance for every candidate of the customized vehicles.

The vehicle sales support or configuration apparatus may further comprise sales support means for accepting an estimate request and/or a negotiation application of the customized vehicle decided by the specification or configuration selection means according to an operation of the user terminal. Here, the code set means does not set the article designation code for the customized vehicle when the customized vehicle is decided by the specification or configuration selection means, but the code set means sets the article designation code for the customized vehicle when the sales support means accepts either the estimate request or the negotiation application.

That is, the acceptance of the estimate request or the negotiation application is done at least before the order of the customized vehicle. Here, when the sales support means accepts the estimate request or the negotiation application, the code set means sets the article designation code for the customized vehicle. Therefore, the article designation code is always set at the time of ordering the customized vehicle. As a result, the procedures of the order, production and materials distribution (delivery) of the customized vehicle are made quite smooth, so that the delay of the vehicle delivery time or the like can be prevented.

Further, when the estimate request or the negotiation application is done, the order of the customized vehicle relating to the estimate request or the negotiation application, that is, utilization of the article designation code set for the customized vehicle, comes to be highly possible. Accordingly, it can suppress setting waste codes that the code set means does not set the article designation code at the time of the specification or configuration selection means deciding the customized vehicle. As a result, the number of the article designation code can be kept at the minimum level, resulting in considerably easy control of the article designation code.

Further, the vehicle sales support or configuration apparatus may further comprise memory means for memorizing the combination of optional items of the customized vehicle decided by the specification or configuration selection means, according to an operation of the user terminal. Here, the code set means does not set the article designation code for the customized vehicle when the memory means memorizes the combination of optional items of the customized vehicle.

All of the customized vehicles having the combination of optional items that are memorized by the memory means would not necessarily ordered, and therefore the rate of ordered customized vehicles memorized by the memory means may be relatively low. Accordingly, when the memory means memorizes the combination of optional items relating to the customized vehicle, the article designation code is not set for the customized vehicle. Therefore, the control of the article designation code can be considerably easy without setting waste codes.

Further, each of the specification or configuration selection means, the sales support means and the memory means may identify the vehicle based on data of the combination of optional items before the article designation code is set for the vehicle having a combination of optional items, while each of these means may identify the vehicle based on the article designation code after the article designation code is set for the vehicle.

Here, in deciding the vehicle price for each of the customized vehicle, the vehicle price of the customized vehicle may not be decided unless the combination of optional items is set, as described above.

Accordingly, it may be preferred that an unit price for each of the optional items is set as a vehicle price in advance, and the vehicle support or configuration apparatus further comprises price provision means for providing a price of the customized vehicle decided by the specification or configuration selection means to the user terminal. Here, the price provision means calculates the price of the customized vehicle having the combination of optional items based on the unit price set for each of the optional items and provides the price of the customized vehicle to the user terminal.

By setting the unit price for each of the optional items and summing up the unit prices of the optional items, the vehicle price of the customized vehicle is decides, when the user decides new combination of optional items. Here, either a manufacturer recommended retail price or a real estimated price may be adopted for the price of the customized vehicle.

Further, the article designation code may be utilized as a code for identifying the customized vehicle, in a production control and/or a materials distribution control of the customized vehicle.

Accordingly, this can make the procedures of order, production and materials distribution of the customized vehicle smooth based on the article designation code.

Further, the production control and/or the materials distribution control of the customized vehicle may be executed based on a control code corresponding to the article designation code. The vehicle sales support or configuration apparatus may further comprise control code set means for setting the control code corresponding to the article designation code when the code set means sets a new article designation code.

In this case, the order of the customized vehicle and the production or materials distribution are done base on the different codes. The control code set means sets the control code corresponding to the article designation code when the code set means sets a new article designation code. Accordingly, this can make the procedures of order, production and materials distribution of the customized vehicle smooth based on the article designation code and the control code.

Further, the vehicle sales support or configuration apparatus may further comprise sales support means for accepting an estimate request and/or a negotiation application of the customized vehicle decided by the specification or configuration selection means according to an operation of the user terminal, and order means for executing processing of ordering the customized vehicle. Here, the code set means sets the article designation code for the customized vehicle when the specification or configuration selection means decides the customized vehicle or when the sales support means accepts the estimate request or the negotiation application, and the code set means registers the article designation code set for the customized vehicle in a predetermined data base when the order means executes the processing of ordering the customized vehicle.

As described above, when the estimate request and the negotiation application are done, the possibility of the order of the customized vehicle relating to the estimate request and the negotiation application may be high. Therefore, the possibility of utilizing the article designation code set for the customized vehicle may become high. However, there may be some cases, for example, in which the negotiation does not result in its contract (customized vehicles are not ordered). This means that all of the article designation codes that have been set are not necessarily utilized. Meanwhile, unless the designation code is set at least before ordering the customized vehicle, it may cause some problems to succeeding steps and this may bring a delay of the delivery time and the like.

Here, the code set means sets the article designation code for the customized vehicle when the specification or configuration selection means decides the customized vehicle or when the sales support means accepts the estimate request or the negotiation application. Accordingly, the delay of the delivery time and the like can be prevented. The set article designation code may be memorized temporarily (provisional set of the customized vehicle).

On the other hand, the code set means registers the article designation code set for the customized vehicle in a predetermined data base when the order means executes the processing of ordering the customized vehicle (formal registration of the article designation code). Accordingly, the number of the article designation code registered in the data base can be kept at a minimum level. That is, resources of data base can be saved properly. Here, the predetermined data base should be a data base for controlling the set article designation code.

Further, the code set means may set the article designation code for the customized vehicle when the specification or configuration selection means decides the customized vehicle or when the sales support means accepts the estimate request or the negotiation application. Also, the code set means may correlate a supplementary information that is supplementary to the customized vehicle with the article designation code set for the customize vehicle when the order means executes the processing of ordering the customized vehicle.

Here, the supplementary information, for example, may be like a tax price for vehicle acquisition, information on dealer options capable/un-capable of installment or the like.

According to the structure, the code set means sets the article designation code for the customized vehicle at least before ordering the customized vehicle (temporary set). Therefore, it can prevent delay of the vehicle delivery time and the like.

Also, the code set means correlate a supplementary information that is supplementary to the customized vehicle with the article designation code set for the customize vehicle when the order means executes the processing of ordering said customized vehicle (formal registration of the article designation code). Accordingly, the article designation code is correlated with the information supplementary to the customized vehicle relating to the article designation code. As a result, it can provide smooth executions by the succeeding steps.

By the way, some cases would happen in which the combination of optional items for the customized vehicle (the customized vehicle, which is decided by the specification or configuration selection means according to an operation of the user terminal, and the article designation code of which has been already set) is modified, for example, during dealer's negotiations with users. As a result, new customized vehicles (customized vehicles having the different combination from that of customized vehicles, the article designation codes of which have been set) having the modified combination of optional items may be ordered.

In this case, when an article designation code is not set for the new customized vehicle, it is necessary to set the article designation code. However, it may be very troublesome for the user (customer) to decide the new customized vehicle by re-operating the user terminal only for the purpose of making the code set means set the article designation code.

Therefore, a dealer terminal installed at a sales company for negotiations with customers may be connected via communication lines. The code set means, at the request of the dealer terminal, may modify the combination of optional items of the customized vehicle, for which the article designation code is set, and decide a new customized vehicle having the modified combination of optional items, and the code set means may set a new article designation code for the new customized vehicle when the article designation code has not been set for a vehicle having the combination of the same optional items as the new customized vehicle.

Accordingly, when the combination of optional items of the customized vehicle is modified during sales company's negotiations with users, modifying the combination of optional items is requested from the dealer terminal installed at the sales company to the vehicle sales support or configuration apparatus. The dealer terminal, for example, may be operated by a person in charge at sales companies. Therefore, the code set means modifies the combination of optional items of the customized vehicle, for which the article designation code is set, and decides a new customized vehicle having the modified combination of optional items. As a result, the combination of optional items of the customized vehicle is capable of being modified, without any operations by users themselves.

Further, the code set means sets a new article designation code for the new customized vehicle when the article designation code has not been set for a vehicle having the combination of the same optional items as the new customized vehicle. Here, when the article designation code has been set for the vehicle having the combination of the same optional items as the new customized vehicle, setting the article designation code is not done. Accordingly, the article designation code is set at the time of ordering the new customized vehicle, and thereby it is possible to prevent the delay of vehicle delivery time and the like.

It is preferred that the code set means sets the article designation code of the customized vehicle according to a predetermined rule.

Further, it is preferred that code set means correlates the supplementary information with the article designation code according to a predetermined rule.

It may be necessary to decide all of the combinations of optional items before starting the vehicle sales support service in case of setting the article designation code for every candidate of the customized vehicles in advance. Then, it may also be necessary to set the article designation code for each of the combination of optional items and correlate each of the set article designation codes with the supplementary information.

On the other hand, when the article designation code is set at each time a new customized vehicle is decided by users, the article designation code may be set based on a rule. Thus, setting a rule for setting the article designation code or a rule for correlating the supplementary information is just enough before staring the vehicle sales support service to users. Therefore, its can greatly simplify works for starting the service.

Further, if setting the article designation code and correlating the supplementary information are done for all of the candidates of the customized vehicle, there may be some possibility of occurrence of mistakes in procedures. Especially, the more candidates of the customized vehicle there are, the higher the occurrence possibility of mistakes is. However, in this case, just setting the rules can make it possible to set the article designation code and correlate the supplementary information based on the rules. Therefore, this can improve a certainty of setting the article designation code and correlating the supplementary information.

A vehicle sales support or configuration program of the present invention is a program for controlling the vehicle sales support apparatus described above.

The vehicle sales support or configuration program makes the vehicle sales support or configuration apparatus execute specification or configuration selection processing of deciding a customized vehicle having a combination of a plurality of optional items that are selected from optional items set in advance as the vehicle specification according to an operation of said user terminal, and code set processing of setting an article designation code used for identifying the combination of optional items of the vehicle at its ordering, in which the article designation code is not set for the decided customized vehicle when the article designation code has been set for a vehicle having a combination of the same optional items as the customized vehicle decided in the specification or configuration selection processing, while the article designation code is set for the decided customized vehicle when the article designation code has not been set for a vehicle having the combination of the same optional items as the customized vehicle.

Here, the vehicle sales support or configuration program may further make the vehicle sales support or configuration apparatus execute sales support processing of accepting either an estimate request or a negotiation application of the customized vehicle decided by the specification and/or configuration selection proceeding, according to an operation of the user terminal. Here, the code set processing does not set the article designation code for the customized vehicle when the customized vehicle is decided by the specification or configuration selection processing, but the code set processing sets the article designation code for the customized vehicle when either the estimate request or the negotiation application is accepted by the sales support processing.

Further, it is preferred that each of the specification selection processing and the sales support processing identifies the vehicle based on data of the combination of its optional items before the article designation code is set for the vehicle having a combination of optional items, while each of the processing identifies the vehicle based on the article designation code after the article designation code is set for the vehicle.

Further, a unit price for each of the optional items may be set as a vehicle price in advance. In this case, the vehicle sale support or configuration program may further make the vehicle sales support or configuration apparatus execute price provision processing of calculating the price of the customized vehicle having the combination of optional items decided by the specification or configuration selection processing based on the unit price set for each of the optional items according to an operation of the user terminal and providing the price of the customized vehicle to the user terminal.

Additionally, the vehicle sales support or configuration program may further make the vehicle sales support or configuration apparatus execute sales support processing of accepting an estimate request and/or a negotiation application of the customized vehicle decided by the specification or configuration selection processing, according to an operation of the user terminal, and order processing of executing processing of ordering the customized vehicle. Here, the code set processing sets the article designation code for the customized vehicle when the customized vehicle is decided by the specification selection processing or when the estimate request or the negotiation application is accepted by the sales support processing, and the code set processing registers the article designation code set for the customized vehicle in a predetermined data base when the order processing is executed.

Further, the code set processing may set the article designation code for the customized vehicle when the customized vehicle is decided by the specification or configuration selection processing or when the estimate request or the negotiation application is accepted by the sales support processing, and the code set processing may correlate a supplementary information that is supplementary to the customized vehicle with the article designation code set for the customize vehicle when the order processing is executed.

When a dealer terminal installed at a sales company for negotiations with customers is connected to the vehicle sales support or configuration apparatus via communication lines, the code set processing, at the request of the dealer terminal, may modify the combination of optional items of the customized vehicle, for which the article designation code is set, and decide a new customized vehicle having the modified combination of optional items, and the code set processing may set a new article designation code for the new customized vehicle when the article designation code has not been set for a vehicle having the combination of the same optional items as the new customized vehicle.

A recording medium of the present invention is a recording medium in which a vehicle sales support or configuration program is recorded, which is a program for controlling the vehicle sales support or configuration apparatus described above.

The vehicle sales support or configuration program makes the vehicle sales support apparatus execute specification or configuration selection processing of deciding a customized vehicle having a combination of a plurality of optional items that are selected from optional items set in advance as the vehicle specification or configuration according to an operation of said user terminal, and code set processing of setting an article designation code used for identifying the combination of optional items of the vehicle at its ordering, in which the article designation code is not set for the decided customized vehicle when the article designation code has been set for a vehicle having a combination of the same optional items as the customized vehicle decided in the specification or configuration selection processing, while the article designation code is set for the decided customized vehicle when the article designation code has not been set for a vehicle having the combination of the same optional items as the customized vehicle.

A vehicle sales support or configuration method of the present invention is a method, in which by using a vehicle sales support or configuration apparatus and a user terminal that are connected interactively, according to a selection request of vehicle specification or configuration from the user terminal, the vehicle sales support or configuration apparatus provides information on a customized vehicle having the selected vehicle specification or configuration to the user terminal.

Here, the vehicle sales support or configuration method comprises specification selection step in which the vehicle sales support or configuration apparatus decides a customized vehicle having a combination of a plurality of optional items that are selected from optional items set in advance as the vehicle specification or configuration according to an operation of the user terminal, and code set step in which the vehicle sales support or configuration apparatus does not set an article designation code for the decided customized vehicle when the article designation code used for identifying the vehicle specification at its ordering is set for a vehicle having a combination of the same optional items as the customized vehicle decided in the specification selection step, while the vehicle sales support or configuration apparatus sets the article designation code for the decided customized vehicle when the article designation code has not been set for the vehicle having the combination of the same optional items as the customized vehicle.

### BRIEF DESCRIPTION OF THE DRAWINGS

Fig. **1** is a conceptual diagram for showing the whole structure of a customized vehicle estimate/order or configuration system in an embodiment of the present invention.
FIG. **2** is a diagram for showing a functional architecture of processing modules executed in the customized vehicle estimate/order or configuration system;
FIG. **3** is a diagram of an exemplified home window **A-1;**
FIG. **4** is a diagram of an exemplified format of a vehicle specification selection or configuration window **B-1;**
FIG. **5** is a diagram of an exemplified ID/password input window **C-1;**
FIG. **6** is a diagram of an exemplified purchase review information list window **D-1;**
FIG. **7** is a flowchart of code set processing;
FIG. **8** is a flowchart of a customized vehicle estimate/order or configuration system according to Embodiment 2;
FIG. **9** is a diagram of an exemplified negotiation list window **E-1;**
FIG. **10** is a diagram of an exemplified negotiation content window **E-2;**
FIG. **11** is a block diagram for showing an exemplified internal structure of a manufacturer server, a user terminal, a dealer terminal, a progress control computer, a production control computer or a materials distribution control computer;
FIG. **12** is a flowchart of code setting.

### DETAILED DESCRIPTION OF THE INVENTION

### EMBODIMENT 1

Hereinafter, a preferred embodiment of the present invention will be described in detail with reference to the accompanying drawings. A system of Embodiment 1 relates to a vehicle estimate/order or configuration system **S,** in which one of a plurality of optional specification items or (technical) configurations with respect to each of a plurality of predetermined items on the basis of a standard vehicle (base vehicle) having a predetermined specification or (technical) configuration and an equipment is selected by a user (hereinafter sometimes referred to as a customer). Hereinafter, a vehicle, of which specification or configuration has been selected in this way, is designated as a customized vehicle.

### (Whole structure of hardware)

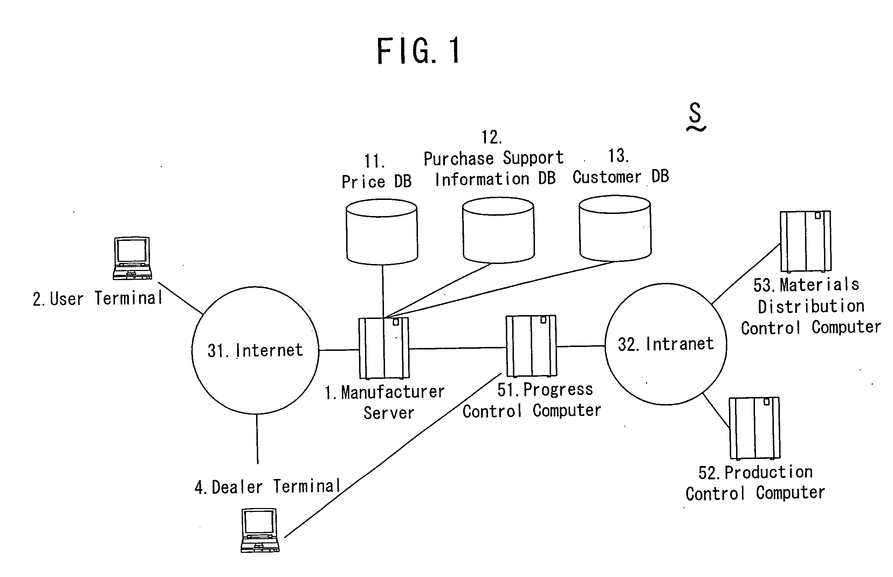

FIG. **1** is a conceptual diagram for showing the whole structure of a customized vehicle estimate/order system **S.**

In FIG. **1,** a reference numeral **1** denotes a server computer used by a manufacturer manufacturing a customized vehicle that is selected in the specification or configuration and is ordered by using the customized vehicle estimate/order system **S.** This server computer **1** principally functions as an application server for a user terminal **2** or a dealer terminal **4**, which will be described below. This server computer may be installed in the manufacturer or operated outside the manufacturer by a third party for the manufacturer, and hereinafter, this server computer is designated as the manufacturer server.

The manufacturer server **1** can make an access by a general method to a price data base (DB) **11,** a purchase support information DB **12,** and a customer DB **13,** if necessary during its operation.

In the price DB **11,** data of retail prices recommended by the manufacturer (hereinafter, referred to as manufacturer recommended retail price) is stored. Here, the manufacturer recommended retail price is an optional item unit price that is set for each of the optional items selectable in the system **S.** Further, in the price DB **11,** the optional item unit price (estimate unit price) set for each of the optional items and by each dealer, which is offered by each dealer as its estimated price when each dealer sells the customized vehicle, is also stored with respect to each dealer. The estimated price (optional item unit price) may be modified and updated at need.

Further, the system **S** is constituted so that when the estimated price is presented to a user, a price of a vehicle acquisition tax may also be provided, which will be described in detail below. A rule for calculating the tax price is stored in the price DB **11.** A formula to calculate the tax price, for example, is stored in the price DB **11,** which is the rule for calculating the tax based on purchase prices of vehicles. Further, for example, as a rule for tax price classified by a vehicle's engine displacement, a table of tax prices correlated with each model (engine, transmission, suspension parts and combination thereof) selectable by the user using the system **S** is also stored. When a customized vehicle is decided by a user and thereby an article designation code for the customized vehicle, which will be described below, is decided, the above-described manufacturer server **1** calculates its tax price based on the above rules and stores it in the price DB **11** with its corresponding article designation code, correlating them.

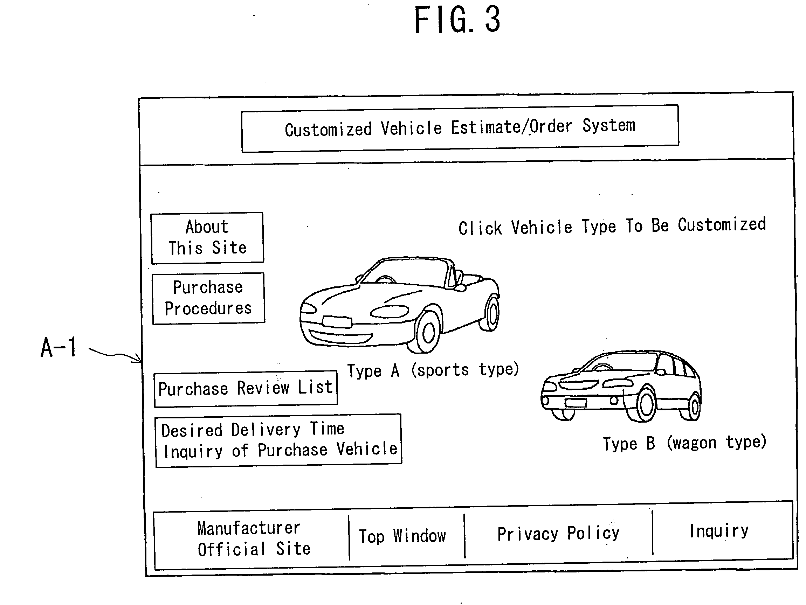

In the purchase support information DB **12**, various windows (FIGS. **3** through **6**) to be displayed on the user terminal **2** in the customized vehicle estimate/order system **S,** information of optional items selectable by the user in the system **S** and the like are stored.

Here, optional items selectable in the system **S** consist of models and options. The models mean optional items consisting of a combination of major parts, such as an engine, a transmission, and suspension parts. The options mean optional items relating to any other equipments than the major parts, such as a seat or a steering wheel. Further, a rule for a combination (limitation of installment for equipments or the like) in the models/options is set and such combination rule is also stored in the purchase support information DB **12**.

Further, in the purchase support information DB **12**, a rule for numbering the article designation code that is used to designate specification items of each customized vehicle is stored. The article designation code is necessary in ordering the customized vehicle. The following rule can be adopted as its appropriate rule. That is, the article designation code, for example, has seven figures consisting of alphabets and numbers, with its first four figures meaning model codes and its last three figures meaning option codes. The model codes consist of a combination of alphabets and numbers to identify models of the customized vehicle. The model codes are predetermined, and a table correlating models and model codes is stored in the purchase support information DB **12**. Meanwhile, the options codes consist of a combination of numbers that differ from each other according to the customized vehicles. The option codes are incremental, starting from "001", at each time the product designation code is set newly (at each time a new customized vehicle is selected by a user).

Further, at each time an order request or a negotiation application of the customized vehicle is done, its article designation code set based on the numbering rule is stored one by one in the purchase support information DB **12**, which will be described in detail below.

In the customer DB **13**, information of a customized vehicle that has been already selected by each user by using the system **S**, an estimated price of the customized vehicle presented to the user and the like are stored in association with a user ID issued to each user. Each user can make an access to the stored information in the customer DB **13** by a certification of the user ID and its password.

A reference numeral **2** denotes a user terminal (customer terminal) formed of a personal computer. Alternatively, the user terminal **2** may be formed of a portable information terminal or a cellular phone. The user terminal **2** for each user using the system **S** may be installed in the user's house or the like, or alternatively in each dealer.

A reference numeral **31** denotes the internet, which is typical communication lines.

A reference numeral **4** denotes a computer installed in each dealer (sales company) selling vehicles of a vehicle manufacturer (which is designated as the dealer terminal in the present embodiment).

In this structure, the manufacturer server **1,** the user terminal **2** and the dealer terminal **4** can perform two-way communications via the internet **31** by a general communication scheme for sending/receiving information on the estimate/order of a customized vehicle, which will be described.

Further, a reference numeral **51** denotes a progress control computer. This is a computer to control a progress of provision of estimated price in the system **S** through a negotiation/contract and to make an order based on the above-described article designation code. The progress control computer **51** is connected to the manufacturer server **1** and the dealer terminal **4** via personal communication lines, respectively.

A reference numeral **52** denotes a production control computer. This is a computer to control an assembling state and the like of a customized vehicle ordered by using the system **S.** A reference numeral **53** denotes a materials distribution control computer, and this is a computer to control a distribution state and the like of an assembled customized vehicle. The production control computer **52** is constituted, so as to control the assembling state and the like based on a production control code corresponding to the article designation code. The materials distribution control computer **53** is constituted so as to control the distribution state and the like based on a materials distribution control code corresponding to the article designation code.

These computers **51** thorough **53** are constituted so that they can make an access to one another via an intranet **32** at need during their operations.

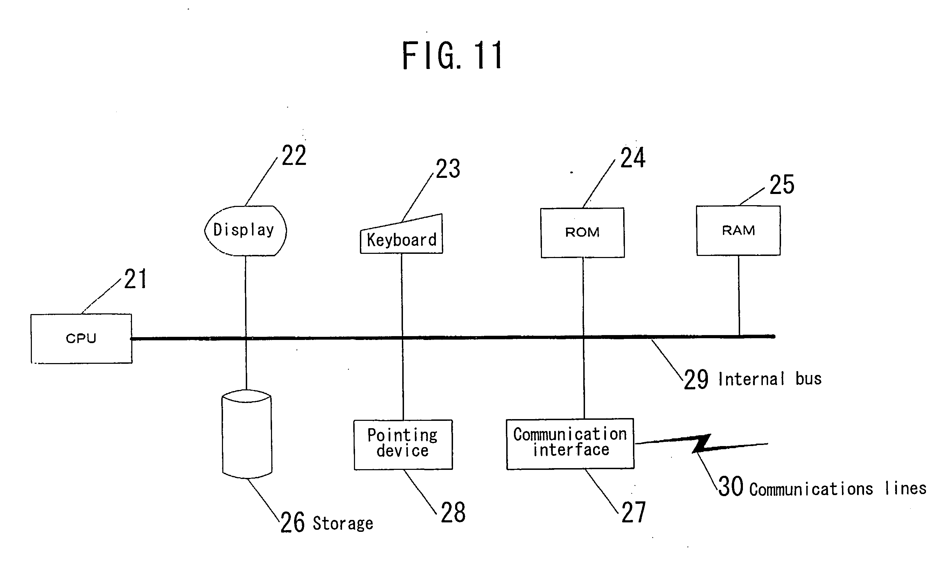

FIG. **11** is a block diagram for showing an exemplified internal structure of the manufacturer server **1,** the user terminal **2,** the dealer terminal **4,** the progress control computer **51**, the production control computer **52** and the materials distribution control computer **53.**

In FIG. **11,** a reference numeral **22** denotes a display for displaying various windows such as a liquid crystal display device, and a reference numeral **23** denotes a keyboard, that is, input means. A reference numeral **24** denotes a ROM in which a boot program and the like are stored. A reference numeral **25** denotes a RAM for temporarily storing results of various processing. A reference numeral **26** denotes a storage, such as a hard disk drive (HDD), in which an information processing program and the like including the vehicle sales support program for operating the present system are stored. A reference numeral **27** denotes a communication interface used for communication with an external device via communications lines **30** (corresponding to the internet **31** and the intranet **32** in this embodiment), which is a modem or a TA when the user terminal **2** is a personal computer and is a radio transmitter-receiver when the user terminal **2** is a portable information terminal or a cellular phone. A reference numeral **28** denotes a pointing device such as a mouse. These internal elements are connected to one another through an internal bus **29,** and a CPU (central processing unit) **21** controls the entire apparatus according to the information processing program stored in the storage **26.** In this embodiment, the display **22,** the keyboard **23** and the pointing device **28** together provide what is called a man-machine interface to a user in each display window described later.

In this embodiment, each of the manufacturer server **1**, the user terminal **2** and the dealer terminal **4** has a software (a software program) of a general communication protocol capable of internet communications, an internet browsing function and a mailing function for sending/receiving data via the internet **31** in accordance with the software, and general software for rendering a browser.

The CPU **21** appropriately executes these software, so that the manufacturer server **1** and the user terminal **2** or the dealer terminal **4** can together constitute the so-called server-client environment with the user terminal **2** or the dealer terminal **4** connected to (logged in) the manufacturer server **1** via the internet **31.**

### (Functional architecture of customized vehicle estimate/order system)

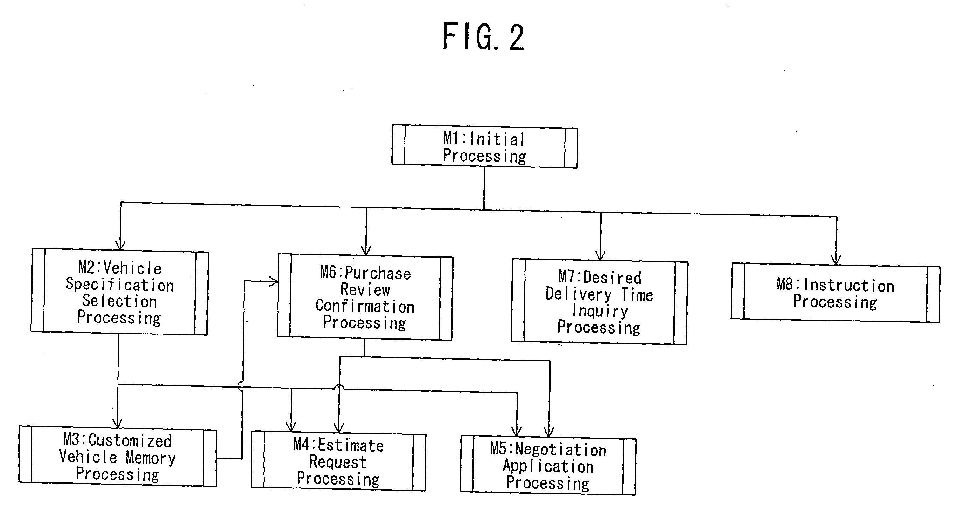

FIG. **2** is a diagram for showing the functional architecture of processing modules executed in the customized vehicle estimate/order system **S.** Each block shown in this drawing corresponds to a unit of software (a software program) roughly divided depending upon a function, which will described in detail below, executed by the CPU of the manufacturer server **1**, and these functional units are designated as processing modules in this embodiment. These processing modules are previously stored in the storage or the like of the manufacturer server **1**. Here, the processing modules may be stored in a recording medium (not shown in any drawing) such as a CD-ROM. In this case, the following processing modules are executed in the manufacturer server **1,** which extracts the proceeding modules recorded in the recording medium.

Now, the function of each processing module will be roughly described.
1. Initial processing (**M1**): A top window (homepage) of the customized vehicle estimate/order system **S** is displayed on the user terminal 2, and the top window can transit to another window for selecting a specification or configuration of a customized vehicle or requesting for an estimate.
2. Vehicle specification or configuration selection processing (**M2**): An environment is provided to the user terminal **2**, in which a desired customized vehicle can be selected by the user operating the user terminal **2** by repeatedly selecting a desired one from optional items previously prepared. Further, when the customized vehicle is decided, this processing can transit to memory processing (**M3**), estimate request processing (**M4**) and negotiation application processing (**M5**).
3. Memory processing (**M3**): When the user deciding the customized vehicle desires, the information of the customized vehicle is memorized in the user DB **13.** This memory processing (**M3**) can transit to purchase review information confirmation processing (**M6**).
4. Estimate request processing (**M4**): When the user deciding the customized vehicle desires, an environment in which estimate of the sales price of the customized vehicle can be requested to dealers is provided to the user terminal **2**. Specifically, this processing will be executed as follows. That is, when the user requests an estimate, an optional item unit price determined by a dealer selected by the user is extracted from the price DB **11,** and its estimated price of the customized vehicle is calculated based on the optional item unit price. The estimated price of the customized vehicle is modified (discounted) properly by the dealer's intention or by the manufacturer server **1** automatically. Then, a result of the estimate is sent to an e-mail address inputted previously by the user as an estimate result response e-mail from the manufacturer server **1**. Here, in the estimate request processing (**M4**), assessment of a trade-in vehicle can be requested as well as the estimate request.
5. Negotiation application processing (**M5**): When the user wants to enter into negotiations for actual purchase of the customized vehicle, this is informed to the dealer. Specifically, in this processing, e-mails informing negotiations requested by the user are sent from the manufacturer server **1** to the dealer and the user. Here, the negotiations by the dealer and the user are done outside of the present system **S.** Actual order of the customized vehicle to the vehicle manufacturer after negotiations at dealers can be done in some ways, such as a way in which the order is executed from the dealer terminal **4** to the manufacturer server **1**, and a way in which the order is executed to the progress control computer **51.**
6. Purchase review information confirmation processing (**M6**): When the user of the user terminal **2** has memorized the information of the customized vehicle in the user DB **13**, done the estimate request, or applied for the negotiations, some information relating to the memorized customized vehicle and progress of estimated prices to date and the like are provided to the user. The purchase review information confirmation processing (**M6**) can transit to the estimate request processing (**M4**) and the negotiation application processing (**M5**).
7. Desired delivery time inquiry processing (**M7**): With respect to a desired delivery time of vehicle by the user, a state and time of real delivery of the customized vehicle are informed to the user (customer) ordering the customized vehicle.
8. Instruction processing (**M8**): Some instructions relating to a use of the present estimate/order system **S** of the customized vehicle and each function thereof, and the like are provided to the user (customer).

Each processing module described above displays each of various display windows, which will be described below, on the display of the user terminal **2** and functions so as to enable input operations to the displayed windows. Accordingly, each processing module is executed by the manufacturer server **1** and the browser program is executed in the user terminal **2**, so that the man-machine interface comprising displays of various windows shown in FIGS **3 - 6** and the like is provided to the display of the user terminal **2.** The user (customer) of the user terminal **2** can achieve the selection of specification or configuration, the estimate, the order and the like of the desired customized vehicle by using the man-machine interface.

Further, code set processing is executed by the manufacturer sever **1** apart from the above processing module.

### (Software executed by manufacturer server 1)

Now, the software executed by the CPU of the manufacturer server **1** will be described referring to the display windows (FIGS. **3 - 6**) of the processing modules.

### - Initial processing (M1) -

FIG. **3** is a diagram of exemplified home window **A-1** displayed by the initial processing (**M1**). The home window **A-1** is a window displayed on the user terminal **2** when the user terminal **2** accesses a site of the present system **S.**

The display window shown in FIG. **3** includes a plurality of operation buttons. When an operation button of "about this site" or "purchase procedures" is operated, a predetermined explanatory window is displayed on the user terminal **2** by the function of the instruction processing (**M8**). Alternatively, when an operation button of "purchase review list" is operated, the function of the purchase review information confirmation processing (**M6**) is provided to the user terminal **2**, which will be described in detail below. Further, when an operation button of "desired delivery time inquiry of purchase vehicle" is operated, the function of the delivery time limit inquiry processing (**M7**) is provided to the user terminal **2**.

Also, in the home window **A-1**, a photograph of a type A, that is, sports type vehicles or a type B, that is, wagon type vehicles is clicked, the function of the vehicle specification or configuration selection processing (**M2**) is provided to the user terminal **2**.

### - Vehicle specification or configuration selection processing (M2) -

In this embodiment, specification items or configurations preferable for a user can be selected with respect to the type A of sports type vehicles and the type B of wagon type vehicles exemplified for the sake of simplification.

When a desired vehicle type is selected by a user in the home window **A-1,** the user is allowed to select a preferred specification or configuration on the basis of a standard vehicle (base vehicle) of the selected vehicle type through the function of the vehicle specification or configuration selection processing (**M2**). In other words, the specification or configuration previously set as the standard vehicle in the present system can be replaced with another specification or configuration, or new equipment (optional equipment) not set in the standard vehicle can be added through the specification or configuration selection operation by the user.

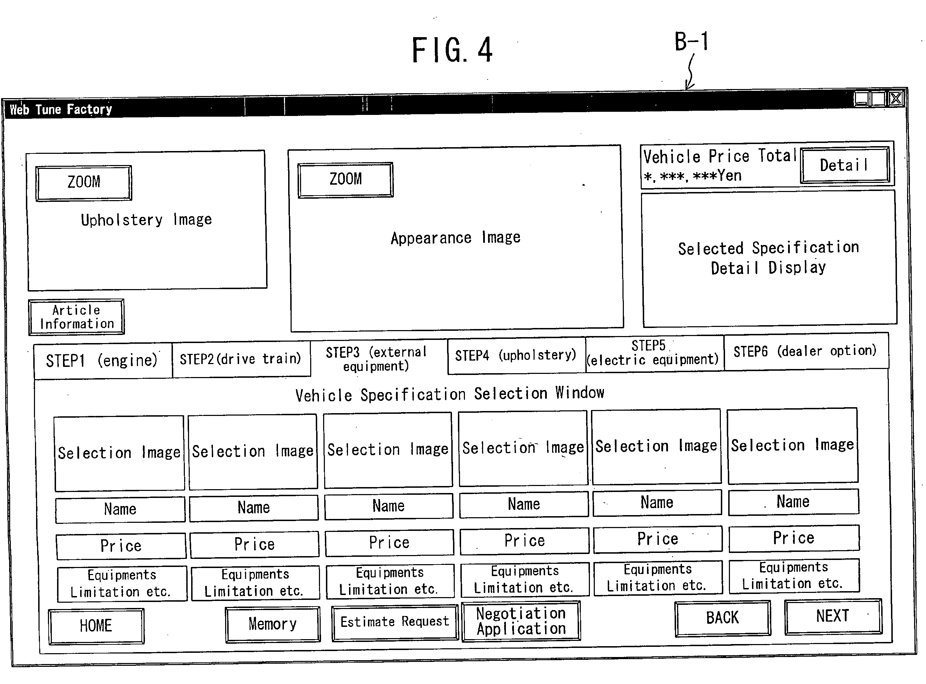

FIG. **4** is a diagram for showing an exemplified format of vehicle specification or configuration selection window **B-1** to be displayed by the vehicle specification or configuration selection processing (**M2**). In an upper half area of the vehicle specification or configuration selection window **B-1,** the followings are displayed: Photographs of appearance and upholstery of the customized vehicle selected on the home window **A-1;** a "ZOOM" button for expanding the photograph; an "article information" button for displaying various information regarding the customized vehicle; a manufacturer recommended retail price of the customized vehicle (a total price for a vehicle) calculated on the basis of selected specification items by the user; a "detail" button for displaying the details of the manufacturer recommended retail price; and details of the optional items (equipments) selected by the user.

Also, in a lower half area of the vehicle specification or configuration selection window **B-1,** selecting steps of the selection of the customized vehicle are displayed in the form of a plurality of overlapped folders. The selecting steps include engine selecting step (first step), drive train selecting step (second step), external equipment selecting step (third step), upholstery selecting step (forth step), electric equipment selecting step (fifth step), and dealer option selecting step (sixth step).

In the exemplified window of FIG.**4**, the folder of the third step is selected and displayed. In the selected folder (in activated state), selectable plural choices of the item to be selected by the user in the step are displayed in the forms of images like a photograph, a name, a price, limitation of equipments and the like. According to the user selection of a desired choice of the displayed specification items, the manufacturer server **1** can obtain a unit price (manufacturer recommended retail price) of the selected specification referring to the price DB **11,** and thereby the manufacturer recommended retail price of the customized vehicle displayed on the vehicle specification or configuration selection window **B-1** can be updated and displayed.

Also, in a lower half area of the vehicle specification or configuration selection window, a "HOME" button for jumping to the home window **A-1** (of FIG. 3) and "BACK" and "NEXT" buttons for transiting to selecting steps before and behind are displayed.

Accordingly, the user of the user terminal **2** can easily select the customized vehicle of the selected desired vehicle type by operations, having a sense of an interactive game through these subsequent selecting operations in the vehicle specification or configuration selection window **B-1.** The user can feel like an engineer at a vehicle tuning shop who tunes up vehicles.

This vehicle specification or configuration selection processing (**M2**) can be realized by using a general configuration engine based on a combination rule of model/option stored in the purchase support information DB **12**.

When the selection is completed for all the items in the vehicle specification or configuration selection window, each of the operation buttons of "memory", "estimate request" and "negotiation application" displayed in a lower half area of the vehicle specification or configuration selection window **B-1** can be activated. Here, operation of the operation button of "estimate request" provides a transit to the estimate request processing (**M4**), and operation of the operation button of "negotiation application" provides a transit to the negotiation application processing (**M5**). Also, operation of the operation button of "memory" provides a transit to the memory processing (**M3**).

Here, when the processing transits to the estimate request processing (**M4**), the optional item unit price (estimated price) presented by the dealer selected by the user is read out from the price DB **11** as described above. Then, an estimated price of the customized vehicle is calculated based on the optional item unit price and then modified. Also, when an article designation code of the customized vehicle is decided, its tax price is read out from the price DB **11** in connection with the article designation code. On the other hand, when an article designation code of the customized vehicle is not decided yet, its tax price is calculated based on the specification of the customized vehicle (combination of optional items) and the rule stored in the price DB **11.** An estimate result decided in this way is sent from the manufacturer server **1** to the e-mail address previously inputted by the user as a response e-mail of the estimate result.

### - Memory processing (M3) -

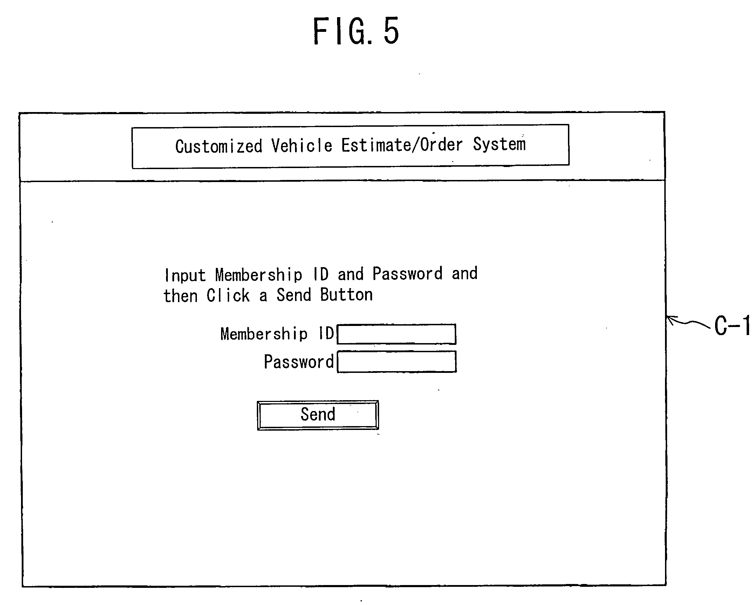

The memory processing (**M3**). enables an ID/password input window **C-1** shown in FIG. **5** to be displayed on the user terminal **2.** In this window, the user of the user terminal **2** can login the present system **S** (manufacturer server **1**) by inputting a user ID (membership ID) and a password preciously issued to the user and then operating a "send" button. When the login is completed, the information of the customized vehicle selected in the vehicle specification or configuration selection processing (**M2**) is stored in the user DB **13** in a state of its correlating with the user ID. Then, it transits to the purchase review information confirmation processing (**M6**).

Here, in the manufacturer server **1**, code set processing is executed when either the estimate request processing (**M4**) or the negotiation application processing (**M5**) is executed, which will be described in detail below. Accordingly, when an article designation code is not set for a vehicle having the same optional items combined as the customized vehicle selected in the above specification or configuration selection processing, an article designation code is set newly to the customized vehicle (combination of optional items).

Accordingly, in the memory processing (**M3**), the customized vehicle is identified to execute processing by the combination of optional items, and in the estimate request processing (**M4**) and the negotiation application processing (**M5**)**,** the customized vehicle is identified to execute processing by the article designation code.

### - Purchase review information confirmation processing (M6) -

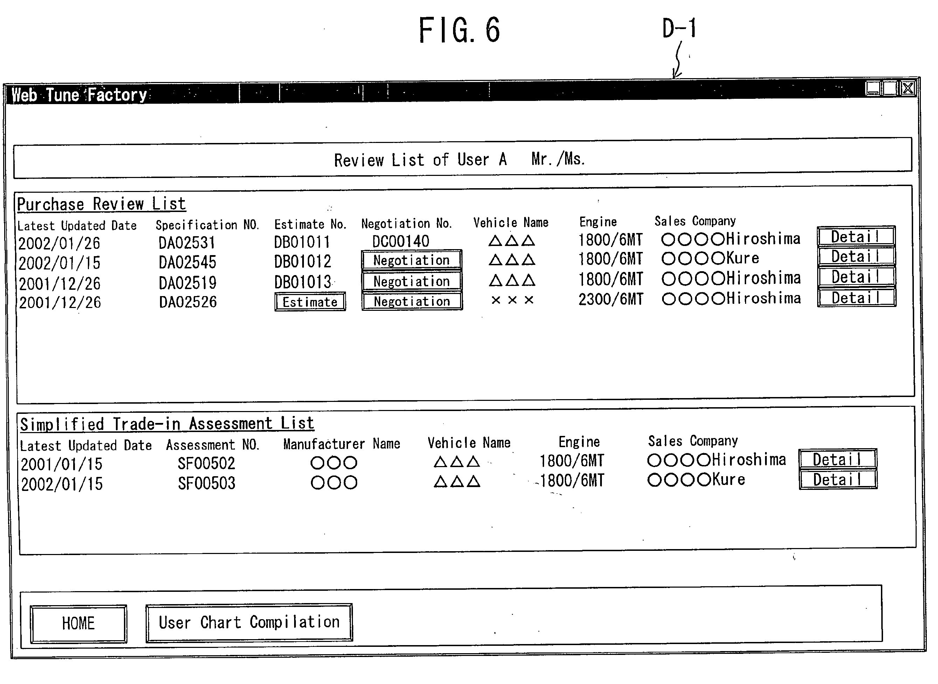

FIG. **6** is a diagram for showing an exemplified purchase review information list window **D-1** to be displayed by the purchase review information confirmation processing (**M6**). Here, the purchase review information confirmation processing (**M6**) can also be activated when an operation button of "purchase review list" is operated in the home window **A-1** (FIG. **3**). In this case, after the ID/password input window (FIG. **5**) is displayed on the user terminal **2** and its certification is done in the window prior to displaying the purchase review information list window **D-1,** the purchase review information list window **D-1** can be displayed on the user terminal **2.**

In the purchase review information list window **D-1,** information (column of "purchase review list") of the customized vehicle stored in the user DB **13** and information (column of "simplified trade-in assessment list") of assessment of the trade-in vehicle are displayed in the form of a list to the user. Here, the user operates selectively "detail" buttons that are placed at desired display items, and thereby window (not shown in any drawing) showing the details of the content of the selected item can be displayed on the user terminal **2** of the user.

Further, in the display items of the customized vehicle, the article designation code (specification No.) is displayed (not displayed when the article designation code is not set), and buttons of "estimate" and "negotiation" are formed in it. When the "estimate" button is operated, the processing transits to the estimate request processing (**M4**) with respect to the customized vehicle, and when the "negotiation" button is operated, the processing transits to the negotiation application processing (**M5**) with respect to the customized vehicle. Here, in the display items of the customized vehicle of which estimate request and negotiation application have been already done, an estimate number and a negotiation number are displayed instead of the buttons of the "estimate" and "negotiation".

In the purchase review information list window **D-1,** a "HOME" button capable of jumping to the home window **A-1** (FIG. **3**) and a "user chart compilation" button capable of compiling private information of the user are displayed. The information of user chart is stored in the user DB **13** in a state of its correlating with the user ID.

In this way, the present system **S** is constituted so as to support the user purchasing the customized vehicle by executing the each processing of memory, estimate request and negotiation application for the customized vehicle that is selected by its specification or configuration on line.

### - Code set processing -

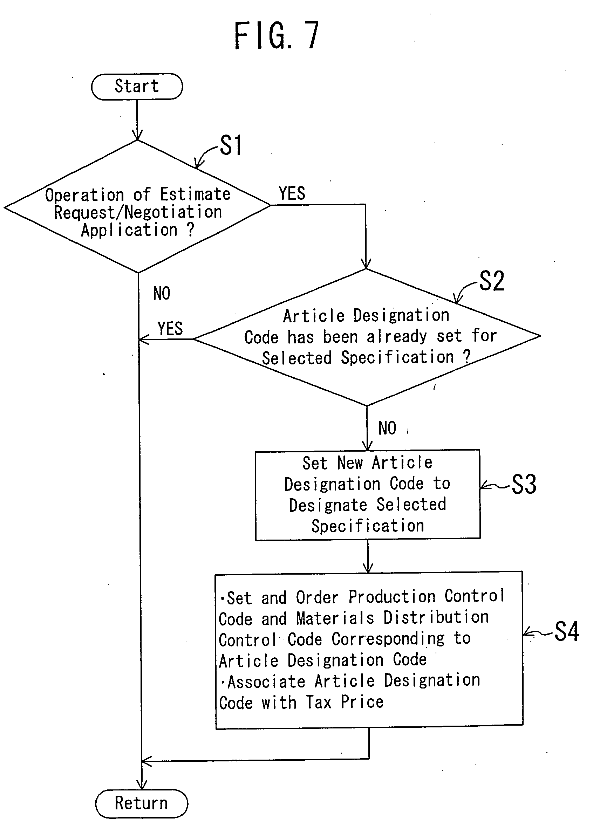

Next, code set processing that is executed by the manufacturer server **1** will be described referring to a flowchart of FIG. **7**.

Firstly, in step **S1,** a determination is made as to whether the user operates to execute the estimate request processing (**M4**) or the negotiation application processing (**M5**) or not. When the answer is YES, it proceeds to step **S2.** Meanwhile, when the answer is NO, it returns.

In the step **S2**, a determination is made as to whether an article designation code of a vehicle having the same optional items as the customized vehicle which should be the subject of the estimate request processing (**M4**) and the negotiation application processing (**M5**) has been already set or not. When it has been set, it returns. Meanwhile, when it has not, it proceeds to step **S3.**

In step **S3**, the article designation code to designate a combination of optional items of the customized vehicle is set based on the numbering rule of article designation code stored in the purchase support information DB **12**.

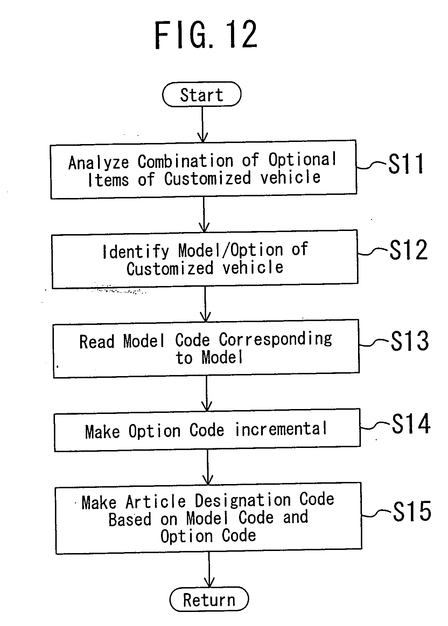

Specifically, this setting of the article designation code is done according to a flowchart of FIG. **12.** That is, in step **S11,** a combination of optional items of the customized vehicle is analyzed. In subsequent step **S12,** a model (combination of major parts, such as engine, transmission, suspension and the like) of the customized vehicle is identified from the analysis result of the step **S11.**

In step **S13,** a model code is read out that corresponds to the model based on the stored table in the purchase support information DB **12.** In step **S14,** an option code is made incremental.

Then, in step **S15,** an article designation code is made based on the model code read out in the step **S13** and the option code set in the step **S14.**

After the article option code is made in this way, the combination of optional items is stored in association with the article designation code in the purchase support information DB **12**. In this way, at each time the user selects a new combination of optional items, an article designation code is set and then stored one by one in the purchase support information DB **12**.

In the next step **S4**, this set article designation code is provided to the production control computer **52** and a production control code corresponding to the article designation code is set, and also this set article designation code set is provided to the materials distribution control computer **53** and a materials distribution control code corresponding to the article designation code is set. Further, a tax price of the customized vehicle relating to this set article designation code is calculated based on the rule stored in the price DB **11** and then it is stored in association with the article designation code in the price DB **11.**

In this way, in the system **S** of Embodiment 1, when an article designation code of a vehicle having the same optional items as the customized vehicle selected by the user has not been set, its article designation code of the customized vehicle is set by the code set processing executed by the manufacturer server **1**.

Accordingly, at each time a new combination of optional items is selected by the user, its article designation code corresponding to the optional items is set. Therefore, it is not necessary to set article designation codes for all combinations (candidates of customized vehicles) in advance. As a result, it can simplify a control of the article designation code greatly.

Also, since an article designation code has not been set in advance, candidates of the customized vehicle can be set beyond the total number of codes that are determined by the number of the figures and the counting rule of the article designation code.

Further, the timing of setting the article designation code is when the estimate request processing (**M4**) or the negotiation application processing (**M5**) is executed by the manufacturer server **1**, and therefore, its article designation code of the customized vehicle has been already set when the customized vehicle is ordered. Also, once the article designation code is set, its corresponding production control code and materials distribution control code are set respectively, and thereby its smooth order, production and materials distribution can be provided. As a result, it can certainly prevent a delay of delivery and the like.

Further, if the article designation code, for example, is set at the memory processing (**M3**), a case in which the article designation code is set for the customized vehicle not ordered actually may increase in happening. However, since the article designation code is set at the estimate request processing (**M4**) or the negotiation application processing (**M5**) as described above, it can suppress that increase. That is, the number of the article designation code can be kept at the minimum level, resulting in an easy control of the article designation code. Also, it can save the volume of the purchase support information DB **12** without wasting it.

Further, setting the manufacturer recommended retail price and the estimated price for each optional item can provide these prices to the user without setting its article designation code for the customized vehicle in advance.

Here, in Embodiment 1, the code processing is executed when the estimate request processing (**M4**) or the negotiation application processing (**M5**) is executed, but the code set processing, however, may be executed when the memory processing (**M3**) is executed. Also, this may be executed when the customized vehicle is ordered. However, setting the article designation code before ordering the customized vehicle like the present embodiment can certainly prevent a delay of delivery and the like.

Further, in Embodiment 1, the production control and the materials distribution control are done base on the production control code and the materials distribution control code corresponding to the article designation code. However, the customized vehicle may be identified by the article designation code in the production control and the materials distribution control. In this case, it is enough for newly set article designation code to be provided from the manufacturer server **1** to the production control computer **52** or the materials distribution control computer **53**.

### EMBODIMENT 2

Embodiment 2 differs from Embodiment 1 in code set processing. Specifically, in Embodiment 2, the article designation code is set provisionally when the user applies for negotiations, and then it is recorded formally when processing relating to the order of customized vehicle is executed.

Here, a structure of an estimate/order system **S** of a customized vehicle in Embodiment 2 is almost the same as that shown in FIG. **1**, and so its detailed description is omitted here.

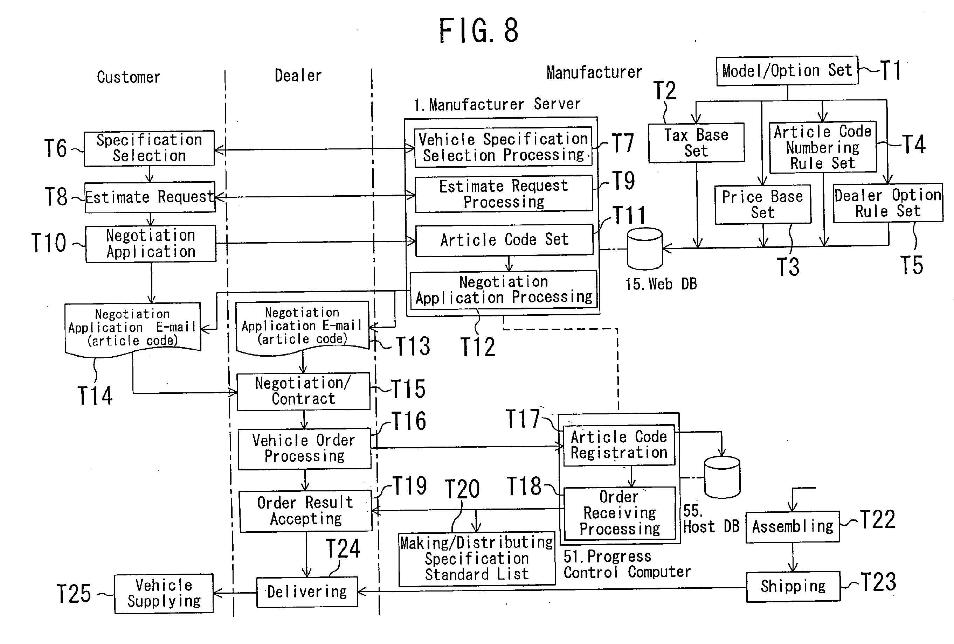

Next, referring to a flowchart of FIG. **8**, code set processing in Embodiment 2 will be described specifically.

In step **T1** of FIG. **8,** setting model/option selectable in the present system **S** is done and setting a rule of combination of mode/option is done. By this step, each option item selectable by the user is set and candidates of customized vehicles are set.

Once the model/option set is done in this way, in subsequent steps **T2 - T5,** a rule of supplementary information for each customized vehicle (candidate of customized vehicle) is made. Specifically, in step **T2**, tax base set is done, in which a rule of calculating a tax price for vehicle acquisition is set, as described above.

Also, in step **T3**, price base set is done, in which a manufacturer recommended retail prices is decided for each optional item of the model and the option that have been set in step **T1.**

In step **T4**, a numbering rule of the article designation code is set.

In step **T5,** a rule of dealer option is set. Here, the dealer option means various kinds of equipments installed at dealers, which differs from "option" set in the above model/option set. Setting the rule of dealer option means to set a rule as to whether the dealer option equipments are capable of being installed or not, and this setting is done for each model and each option which are set in step **T1.** For example, it is a rule that a 17-inch tire is not capable of being installed to a vehicle with a mad flap as a dealer option.

In this way, supplementary rules are set in steps **T2** - **T5**, and these rules are memorized in a web DB **15.** Here, the web DB **15** is a DB consolidating the price DB **11,** the purchase support information DB **12** and the customer DB **13** in Embodiment 1, which is accessed by the manufacturer server **1** at need during its operation.

Here, each step of steps **T1 - T5** is executed before providing services to a customer in the vehicle estimate/order system **S,** and it is processing step executed by a person in charge of the vehicle manufacturer. That is, it is not processing executed by the manufacturer server **1** and the progress control computer **51**.

Next, in steps **T6** and **T7,** the customer operates the user terminal **2** (specification or configuration selection operation), while the manufacturer server **1** executes the vehicle specification or configuration selection processing (**M2**). Accordingly, the customized vehicle is decided, as described above.

Further, in steps **T8** and **T9**, the customer operates the user terminal **2** (estimate request operation), while the manufacturer server **1** executes the estimate request processing (**M4**). Accordingly, the estimate result response e-mail is sent to the customer to provide its estimated price, as described above.

Further, in step **T10,** when negotiation application is asked by the user operating the user terminal **2,** the manufacturer server **1** executes article code set processing in step **T11.** Accordingly, when an article designation code has not been set for a vehicle having the same optional items as the customized vehicle that is asked for the negotiation application, its article designation code is set for the customized vehicle. Meanwhile, when an article designation code has been already set for a vehicle having the same optional items as the customized vehicle that is asked for the negotiation application, its article designation code is not set for the customized vehicle. At this point, the manufacturer server **1** sets its article designation code of the customized vehicle asked for the negotiation application according to the flowchart of FIG. **12** based on a numbering rule of the article designation code that is made in step **T4** and stored in the web DB **15**. This set article designation code is memorized temporarily in the web DB **15**. Here, the article designation code memorized in the web DB **15** is deleted when the customized vehicle is not ordered or the negotiation is completed without ordering. Accordingly, the manufacturer server **1** sets the article designation code provisionally at the execution timing of the negotiation application processing (**M5**).

Then, the manufacturer server **1** executes the negotiation application processing (**M5**) in step **T12.** Accordingly, e-mails of the negotiation application are sent from the manufacturer server **1** to the dealer and the user that are concerned (in steps **T13** and **T14**). Here, the negotiation application e-mail includes the article designation code set in step **T11.**

In this way, negations between the customer and the dealer are done, and when a contract is accomplished (in step **T15**), the dealer executes processing of its vehicle ordering in step **T16.**

In the processing of vehicle ordering, the following verification processing, for example, may be executed. That is, a negotiation number and an article designation code included in a negotiation application e-mail are designated on the dealer terminal **4**, and thereby a verification between a combination of optional items of the customized vehicle asked for the negotiation application and a combination of optional items of the customized vehicle correlated with the article designation code is executed by the progress control computer **51.** Accordingly, the combination of the optional items of the ordered customized vehicle can be decided certainly.

Further, information on a combination of optional items of the customized vehicle during the negotiation application may be sent from the progress control computer **51** to the dealer terminal **4,** differing from this or combining with this. Also, a person in charge at a dealer may make verification between a combination of optional items of the customized vehicle during the negotiation application and a combination of optional items of the customized vehicle to be ordered.

Further, customers often ask for some modifications of optional items of the customized vehicle during negotiations with dealers. As a result, there may be cases in which different customized vehicles are ordered from that decided at their negotiation applications.

In this case, the present system **S** can provide modifications of optional items of the customized vehicle under the customer's negotiations (contracts) by operating the dealer terminal **4**.

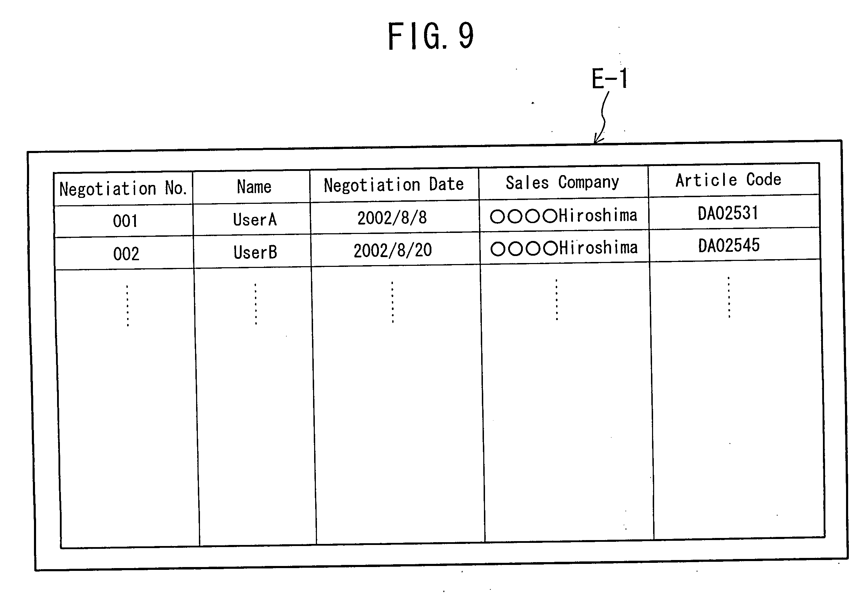

Specifically, the progress control computer **5** displays a negotiation list window **E-1** (FIG. **9**) on the dealer terminal **4** at the request from the dealer terminal **4.** In the negotiation list window **E-1,** a list of customers under negotiations at each dealer at the moment is displayed.

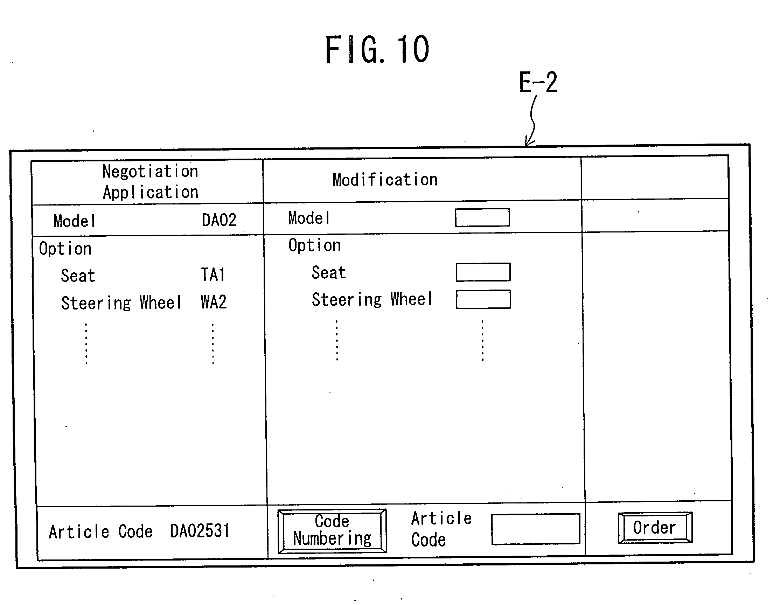

By the dealer person in charge operating a selection of a desired customer in the window **E-1,** a negotiation content window **E-2** (FIG. **10**) showing detailed contents of the customized vehicle under negotiations of the customer is displayed on the dealer terminal **4**.

In the negotiation content window **E-2**, information on a combination of optional items of the customized vehicle set during negotiation applications and its article designation code set (provisionally) for the customized vehicle are displayed in a "negotiation application" column.

Also, a "modification" column is provided in the negotiation content window **E-2,** and modifying optional items is possible by inputting in a text box provided in the column. That is, changing/deleting optional items that have been selected and adding new optional items are possible.

Then, after modifying the optional items, the progress control computer **51** executes the code set processing by operating a "code numbering" button. That is, when an article designation code is set for a new customized vehicle of which optional items have been modified, its article designation code is not set. Meanwhile, the article designation code is not set, its article designation code is set according to the numbering rule. Then, the new article designation code of the customized vehicle is displayed in the "modification" column in the negotiation content window **E-2**.

Here, an "order" button is provided in the negotiation content window **E-2,** and vehicle order processing (in step **T16**) is executed by operating this button.

Then, in the vehicle order processing in step **T16,** an order signal of the customized vehicle is sent from the dealer terminal **4** to the progress control computer **51.** At this point, the customized vehicle is identified by the article designation code.

The progress control computer **51** that has received the order signal registers the article designation code set for the customized vehicle to be ordered in step **T17** (set in step **T11**) in a host DB **55** (formal registration). When the article designation code is registered in the host DB **55**, its supplementary information of the customized vehicle (tax, manufacturer recommended retail price and dealer option information) is registered according to each rule memorized in the web DB **15** in association with the article designation code.

In this way, the article designation code registered in the host DB **55** is utilized in each processing after ordering (production and materials distribution). Also, this registered article designation code reflects on the web DB **15** in the manufacturer server **1**. Accordingly, it is possible to determine whether an article designation code is set for the customized vehicle under negotiation application or not when the manufacturer server **1** executes the article code set processing (in step **T11**).

Here, when the article designation code set for the customized vehicle to be ordered has been already registered in the host DB **55,** the registration processing in step **T17** is omitted.

The progress control computer **51** also executes order receiving processing in step **T18.** Accordingly, a production (assembling) of the customized vehicle states in step **T22.**

Further, the progress control computer **51** informs the dealer of the order receiving, thereby the dealer accepts a result of the order (in step **T19**). Further, the progress control computer **51** makes a specification standard list on specifications (combination of optional items) of the customized vehicle corresponding to the article designation code formally registered in step **T17** and distributes it to each dealer. (in step **T20**)

The customized vehicle assembled in step **T22** is shipped from the manufacturer (in step **T23**), and delivered to the dealer (in step **T24**). Then, predetermined registration procedures and the like are executed at the dealer, and the customized vehicle is supplied to the customer (in step **T25**).

In this way, in Embodiment 2, the article designation code is set (provisionally) when the negotiation application processing (**M5**) is executed, and this article designation code is registered in the host DB **55** when processing relating to order receiving (order receiving processing) is executed. Here, the article designation code and the supplementary information of the customized vehicle relating to the article designation code are correlated with one another.

Accordingly, setting provisionally the article designation code at the time of negotiation applications can prevent a delay of vehicle delivery time or the like. Also, registering formally the article designation code at the time of order receiving processing can saves resources of database without wasting it.

Further, it can simplify works at a service start greatly with just setting the numbering rule of the article designation code and the rule of the supplementary information before starting the service of the system **S**. It can also increase a certainty of setting the article designation code and correlating the supplementary information.

Further, even if optional items of the customized vehicle are modified during negotiations of the customer with dealers, an article designation code can be set for a new customized vehicle with modified optional items by operating the dealer terminal **4** to modify the optional items thereof. Accordingly, the customer does not need to operate the user terminal **2**, and thereby it can prevent a troublesomeness of the customer's operations and prevent the delay of vehicle delivery time.

Here, in Embodiment 2, the code set processing is executed (in step **T11**) when the negotiation application processing (**M5**) is executed. However, the code set processing, for example, may be executed when the estimate request processing (**M4**) is executed or when the customized vehicle is decided in the vehicle specification or configuration selection processing (**M2**). Also, it may be executed when the memory processing (**M3**) is executed, which is omitted in Embodiment 2.

Further, in Embodiment 2, the provisional setting of the article designation code is executed by the manufacturer server **1**, and formal registration thereof is executed by the progress control computer **51**. However, both of these provisional setting and formal registration may be executed by either of the manufacturer server **1** and the progress control computer **51**.

### OTHER EMBODIMENT

In Embodiments 1 and 2, the estimate request processing (**M4**) is constituted so that the manufacturer server **1** can calculate its estimated price of the customized vehicle. However, it may be calculated based on the optional item unit price stored in the price DB **11** by persons in charge at dealers operating the dealer terminal **4,** and along with its modification.

Further, in Embodiments 1 and 2, the manufacturer server **1** executes both of the estimate request processing (**M4**) and the negotiation application processing (**M5**). However, it may execute only either one of them.

Further, processing executed by the manufacturer server **1** may be executed by a plurality of servers taking partial charges thereof.

Here, the customized vehicle estimate/order system described above should not be adopted compulsorily by dealers at the vehicle manufacturer's request, but be adopted voluntarily by dealers at their desires.

## Claims

1. A vehicle sales support apparatus, in which in response to a request for selecting a vehicle specification from a user terminal connected via interactive communication lines, information on a customized vehicle having the selected vehicle specification is provided to the user terminal, the vehicle sales support apparatus comprising:
specification selection means for deciding the customized vehicle having a combination of a plurality of optional items that are selected from optional items set in advance as said vehicle specification,. according to an operation of said user terminal; and
code set means for setting an article designation code that is used for identifying the combination of optional items of said customized vehicle when the vehicle is ordered,
wherein said code set means does not set the article designation code for said decided customized vehicle when the article designation code has been set for a vehicle having the combination of the same optional items as said customized vehicle decided by said specification selection means, while said code set means sets the article designation code for said decided customized vehicle when the article designation code has not been set for a vehicle having the combination of the same optional items as said customized vehicle.

2. The vehicle sales support apparatus of Claim **1**, further comprising sales support means for accepting an estimate request and/or a negotiation application of the customized vehicle decided by said specification selection means, according to an operation of the user terminal,
wherein said code set means does not set the article designation code for said customized vehicle when the customized vehicle is decided by said specification selection means, but said code set means sets the article designation code for said customized vehicle when said sales support means accepts either said estimate request or said negotiation application.

3. The vehicle sales support apparatus of Claim **1** or **2,** further comprising memory means for memorizing the combination of optional items of the customized vehicle decided by said specification selection means, according to an operation of the user terminal,
wherein said code set means does not set the article designation code for said customized vehicle when said memory means memorizes the combination of optional items of the customized vehicle.

4. The vehicle sales support apparatus of Claim **2** or **3**,
wherein each of said means identifies the vehicle based on data of the combination of its optional items before the article designation code is set for said vehicle having a combination of optional items, while each of said means identifies the vehicle based on the article designation code after the article designation code is set for said vehicle.

5. The vehicle sales support apparatus of one of the preceding claims,
wherein an unit price for each of the optional items is set as a vehicle price in advance, the vehicle support apparatus further comprises price provision means for providing a price of the customized vehicle decided by said specification selection means to said user terminal, and said price provision means calculates the price of said customized vehicle having the combination of optional items based on said unit price set for each of the optional items and provides the price of said customized vehicle.

6. The vehicle sales support apparatus of one of the preceding claims,
wherein the article designation code is utilized as a code for identifying said customized vehicle, in a production control and/or a materials distribution control of the customized vehicle.

7. The vehicle sales support apparatus of one of the preceding Claims **1 - 5,**
wherein said production control and/or said materials distribution control of the customized vehicle is executed based on a control code corresponding to the article designation code, and the vehicle sales support apparatus further comprises control code set means for setting the control code corresponding to the article designation code when said code set means sets a new article designation code.

8. The vehicle sales support apparatus of Claim **1**, further comprising:
sales support means for accepting an estimate request and/or a negotiation application of the customized vehicle decided by said specification selection means, according to an operation of the user terminal; and
order means for executing processing of ordering said customized vehicle,
wherein said code set means sets the article designation code for said customized vehicle when said specification selection means decides the customized vehicle or when said sales support means accepts said estimate request or said negotiation application, and said code set means registers the article designation code set for the customized vehicle in a predetermined data base when said order means executes the processing of ordering said customized vehicle.

9. The vehicle sales support apparatus of Claim **1,** further comprising:
sales support means for accepting an estimate request and/or a negotiation application of the customized vehicle decided by said specification selection means, according to an operation of the user terminal; and
order means for executing processing of ordering said customized vehicle,
wherein said code set means sets the article designation code for said customized vehicle when said specification selection means decides the customized vehicle or when said sales support means accepts said estimate request or said negotiation application, and said code set means correlates a supplementary information that is supplementary to said customized vehicle with the article designation code set for the customize vehicle when said order means executes the processing of ordering said customized vehicle.

10. The vehicle sales support apparatus of one of the preceding claims,
wherein a dealer terminal installed at a sales company for negotiations with customers is connected via communication lines, said code set means, at the request of said dealer terminal, modifies the combination of optional items of the customized vehicle, for which the article designation code is set, and decides a new customized vehicle having the modified combination of optional items, and said code set means sets a new article designation code for said new customized vehicle when the article designation code has not been set for a vehicle having the combination of the same optional items as said new customized vehicle.

11. The vehicle sales support apparatus of one of the preceding claims,
wherein said code set means sets the article designation code of the customized vehicle according to a predetermined rule.

12. The vehicle sales support apparatus of Claim **9,**
wherein said code set means correlates the supplementary information with the article designation code according to a predetermined rule.

13. A vehicle sales support program for controlling a vehicle sales support apparatus, in which in response to a request for selecting a vehicle specification from a user terminal connected via interactive communication lines, information on a customized vehicle having the selected vehicle specification is provided to the user terminal, the vehicle sales support program making said vehicle sales support apparatus execute:
specification selection processing of deciding a customized vehicle having a combination of a plurality of optional items that are selected from optional items set in advance as said vehicle specification, according to an operation of said user terminal; and
code set processing of setting an article designation code used for identifying the combination of optional items of the vehicle at its ordering, in which the article designation code is not set for said decided customized vehicle when the article designation code has been set for a vehicle having a combination of the same optional items as said customized vehicle decided in said specification selection processing, while the article designation code is set for said decided customized vehicle when the article designation code has not been set for a vehicle having the combination of the same optional items as said customized vehicle.

14. The vehicle sales support program of Claim **13**, further making said vehicle sales support apparatus execute sales support processing of accepting an estimate request and/or a negotiation application of the customized vehicle decided by said specification selection proceeding, according to an operation of the user terminal,
wherein said code set processing does not set the article designation code for said customized vehicle when the customized vehicle is decided by said specification selection processing, but said code set processing sets the article designation code for said customized vehicle when either said estimate request or said negotiation application is accepted by said sales support processing.

15. The vehicle sales support program of Claim **14**,
wherein each of said processing identifies the vehicle based on data of the combination of its optional items before the article designation code is set for said vehicle having a combination of optional items, while each of said processing identifies the vehicle based on the article designation code after the article designation code is set for said vehicle.

16. The vehicle sales support program of one of the preceding Claims **13 - 15,**
wherein an unit price for each of the optional items is set as a vehicle price in advance, and the vehicle support program further makes said vehicle sales support apparatus execute price provision processing of calculating the price of the customized vehicle having the combination of optional items decided by said specification selection processing based on said unit price set for each of the optional items according to an operation of the user terminal and providing the price of said customized vehicle to the user terminal.

17. The vehicle sales support program of Claim **13**, further making said vehicle sales support apparatus execute:
sales support processing of accepting an estimate request and/or a negotiation application of the customized vehicle decided by said specification selection processing, according to an operation of the user terminal; and
order processing of executing processing of ordering said customized vehicle,
wherein said code set processing sets the article designation code for said customized vehicle when the customized vehicle is decided by said specification selection processing or when said estimate request or said negotiation application is accepted by said sales support processing, and said code set processing registers the article designation code set for the customized vehicle in a predetermined data base when said order processing is executed.

18. The vehicle sales support program of Claim **13**, further making said vehicle sales support apparatus execute:
sales support processing of accepting an estimate request and/or a negotiation application of the customized vehicle decided by said specification selection processing, according to an operation of the user terminal; and
order processing of executing processing of ordering said customized vehicle,
wherein said code set processing sets the article designation code for said customized vehicle when the customized vehicle is decided by said specification selection processing or when said estimate request or said negotiation application is accepted by said sales support processing, and said code set processing correlates a supplementary information that is supplementary to said customized vehicle with the article designation code set for the customize vehicle when said order processing is executed.

19. The vehicle sales support program of one of the preceding Claims **13 - 18,**
wherein a dealer terminal installed at a sales company for negotiations with customers is connected to said vehicle sales support apparatus via communication lines, said code set processing, at the request of said dealer terminal, modifies the combination of optional items of the customized vehicle, for which the article designation code is set, and decides a new customized vehicle having the modified combination of optional items, and said code set processing sets a new article designation code for said new customized vehicle when the article designation code has not been set for a vehicle having the combination of the same optional items as said new customized vehicle.

20. A recording medium in which a vehicle sales support program is recorded, the vehicle sales support program being for controlling a vehicle sales support apparatus, in which in response to a request for selecting a vehicle specification from a user terminal connected via interactive communication lines, information on a customized vehicle having the selected vehicle specification is provided to the user terminal, the vehicle sales support program making said vehicle sales support apparatus execute:
specification selection processing of deciding a customized vehicle having a combination of a plurality of optional items that are selected from optional items set in advance as said vehicle specification, according to an operation of said user terminal; and advance as said vehicle specification, according to an operation of said user terminal; and
code set processing of setting an article designation code used for identifying the combination of optional items of the vehicle at its ordering, in which the article designation code is not set for said decided customized vehicle when the article designation code has been set for a vehicle having a combination of the same optional items as said customized vehicle decided in said specification selection processing, while the article designation code is set for said decided customized vehicle when the article designation code has not been set for a vehicle having the combination of the same optional items as said customized vehicle.

21. A vehicle sales support method, in which by using a vehicle sales support apparatus and a user terminal that are connected interactively, according to a selection request of vehicle specification from the user terminal, the vehicle sales support apparatus provides information on a customized vehicle having the selected vehicle specification to the user terminal, the vehicle sales support method comprising:
specification selection step in which said vehicle sales support apparatus decides a customized vehicle having a combination of a plurality of optional items that are selected from optional items set in advance as said vehicle specification, according to an operation of said user terminal; and
code set step in which said vehicle sales support apparatus does not set an article designation code for said decided customized vehicle when the article designation code used for identifying the vehicle specification at its ordering is set for a vehicle having a combination of the same optional items as said customized vehicle decided in said specification selection step, while said vehicle sales support apparatus sets the article designation code for said decided customized vehicle when the article designation code has not been set for the vehicle having the combination of the same optional items as said customized vehicle.
